# EUROPEAN PATENT APPLICATION

(11) **EP 4 188 034 A1**
(43) Date of publication of application: **31.05.2023**
(21) Application number: 22209912.9
(22) Date of filing: 28.11.2022
(51) Int. Cl.: H05B 3/14, H05B 3/26, H01C 17/26

(54) **RESISTIVE TUNING VIA LASER INDUCED GRAPHENE FOR CARBON ALLOTROPE ELECTROTHERMAL HEATER**

(30) Priority: 29.11.2021 US 202117536723
(71) Applicant: Goodrich Corporation, Charlotte, NC 28217-4578 (US)
(72) Inventor: SLANE, Casey, Tallmadge, OH 44278 (US); BOTURA, Galdemir Cezar, Akron, 44313 (US); ZHAO, Wenping, Glastonbury, CT 06033 (US)
(74) Representative: Dehns

(57) **Abstract**

A method of tuning an electrical resistance of a laser-induced graphene heater is provided. The method includes forming a base carbon heating element (150), and determining a target electrical resistance of a laser-induced graphene (LIG) heater to be fabricated from the base carbon heating element (150). The method further includes determining a targeted LIG pattern that provides the target electrical resistance, and directing laser energy on to the base carbon heating element (150) based on the targeted LIG pattern to form one or more LIG regions. The one or more LIG regions define a LIG pattern to from the LIG heater having the target electrical resistance.

## Description

### BACKGROUND

The embodiments herein relate to heating systems and more specifically to an aircraft feature with a heating system formed of laser-induced graphene.

Control surfaces of an aircraft may utilize heating to avoid icing. In addition, an aircraft may have internal components that engage fluids, such as tubes, valves and tanks, e.g., utilized for potable or wastewater systems. Such internal components may also utilize heating for aircraft systems to operate properly. Other internal features, such as walkways and seating, may also utilize heating to provide comfort to crew and passengers.

### BRIEF DESCRIPTION

According to a non-limiting embodiment, a method is provided for tuning an electrical resistance of a laser-induced graphene heater. The method comprises forming a base carbon heating element, and determining a target electrical resistance of a laser-induced graphene (LIG) heater to be fabricated from the base carbon heating element. The method further comprises determining a targeted LIG pattern that provides the target electrical resistance; and directing laser energy on to the base carbon heating element based on the targeted LIG pattern to form at least one LIG region that defines a LIG pattern to from the LIG heater having the target electrical resistance.

The method includes an additional feature, wherein forming the at least one LIG region reduces an electrical resistance of the base carbon heating element.

The method includes an addition feature, wherein forming the base carbon heating element includes impregnating a carbon-based precursor with a polymer material.

The method includes an additional feature, wherein a region of the carbon-based precursor receiving the laser energy is converted into LIGthat defines the at least one LIG region.

The method includes an additional feature, wherein the at least one LIG region has a first electrical resistance, and a region that excludes the LIG has a second electrical resistance that is greater than the at least one LIG region.

The method includes an additional feature, wherein a first portion of the at least one LIG region includes a first amount of LIG and a second portion of the LIG region includes a second amount of LIG that is greater than the first portion.

The method includes an additional feature, wherein the first portion of the at least one LIG region has a first electrical resistance defined by the first amount of LIG and the second portion of the at least one LIG region has a second electrical resistance defined by the second amount of the LIG that is greater than the first electrical resistance.

According to another non-limiting embodiment, a laser-induced graphene (LIG) heater comprises a base carbon heating element including a first region and a second region at a different location of the base carbon heating element with respect to the first region. LIG is formed in the second region such that the second region has different electrical resistance than the first region.

The LIG heater includes an additional feature, wherein the first region has a first electrical resistance and the second region has a second electrical resistance defined by the LIG that is less than the first electrical resistance.

The LIG heater includes an additional feature, wherein the first region excludes the LIG.

The LIG heater includes an additional feature, wherein the base carbon heating element includes a plurality of the first regions and a plurality of the second regions.

The LIG heater includes an additional feature, wherein the plurality of first regions and the plurality of second regions have an alternating arrangement spanning from one end of the base carbon heating element to an opposing end of the base carbon heating element.

The LIG heater includes an additional feature, wherein the LIG is formed in both the first region and the second region.

The LIG heater includes an additional feature, wherein the first region includes a first amount of the LIG and the second region includes a second amount of the LIG different from the first amount.

The LIG heater includes an additional feature wherein the first amount of the LIG is less than the second amount of the LIG.

The LIG heater includes an additional feature wherein the first amount of the LIG defines the first electrical resistance and the second among of the LIG defines the second electrical resistance that is greater than the first electrical resistance.

The LIG heater includes an additional feature, wherein the LIG is formed to define a gradient pattern extending from the first amount of the LIG among of the LIG to the second amount of the LIG.

The LIG heater includes an additional feature, wherein the base carbon heating element includes a carbon-based precursor impregnated with polymer.

### BRIEF DESCRIPTION OF THE DRAWINGS

FIG. 1 is a process flow illustrating a process of fabricating a laser-induced graphene heater having a tuned resistance according to a non-limiting embodiment;
FIG. 2 is a flow diagram illustrating a method of tuning an electrical resistance of a laser-induced graphene heater capable of being integrated in an allotrope electrothermal heater system according to a non-limiting embodiment; and
FIG. 3 is a block diagram of an allotrope electrothermal heater system including a laser-induced graphene heater having a tuned resistance according to a non-limiting embodiment.

### DETAILED DESCRIPTION

A detailed description of one or more embodiments of the disclosed apparatus and method are presented herein by way of exemplification and not limitation with reference to the Figures.

Carbon based heaters using carbon fiber, carbon nanotubes, and/or carbon allotropes have been investigated as a possible alternative to metallic heaters for aircrafts system such as ice protection. Carbon based heaters can improve on the production safety of metal foil heaters but have less design freedom than metal heater. Laser induced graphene (LIG), typically used to create standalone conductive traces, is a multifunctional graphene material that can be utilized to produce carbon-based heaters. Conventional LIG-based heaters are fabricated with a non-variable electrical resistance.

LIG can be produced by directing an infrared laser on to a carbon-based precursor material. LIG processes are typically used to create standalone conductive traces. However, various non-limiting non-embodiments described herein utilizes LIG techniques to produce carbon-based heaters having a tuned (e.g., variable or adjustable) electrical resistance. In one or more non-limiting embodiments, LIG is applied to a base carbon heating that includes a carbon-based precursor impregnated with polymer to facilitate tuning of the electrical resistance of an LIG heater. In one or more non-limiting embodiments, the polymer can include, but is not limited to, thermoset resin and thermoplastic polymer.

The electrical resistance of the LIG heater can be tuned down (e.g., reduced), for example, using applying laser energy to the base carbon heating element to induce carbonization of surrounding thermosetting/plastic matrix. The LIG tuning techniques described herein allows for tuning a LIG heater to achieve a targeted electrical resistance without the need to create gaps or perforations in the base carbon heating element. Accordingly, the LIG tuning techniques can be performed on plain thermosets or plastics, and then combined with the carbon-based heaters, thermosets/plastics infused carbon nanotube (CNT) non-woven fabrics, CNT Yarns, and/or CNT woven fabrics. In one or more non-limiting embodiments, the laser energy used in the LIG tuning techniques described herein can be applied locally, in a gradient fashion, or across an entire area to achieve the level of customization desired, i.e., to tune the LIG heater to a targeted electrical resistance. The LIG tuning techniques described herein can be combined with additional techniques such as perforation, and/or resistance increasing, for example, to further increase manufacturing precision and/or be used to increase yield via material normalization, spot correction, etc.

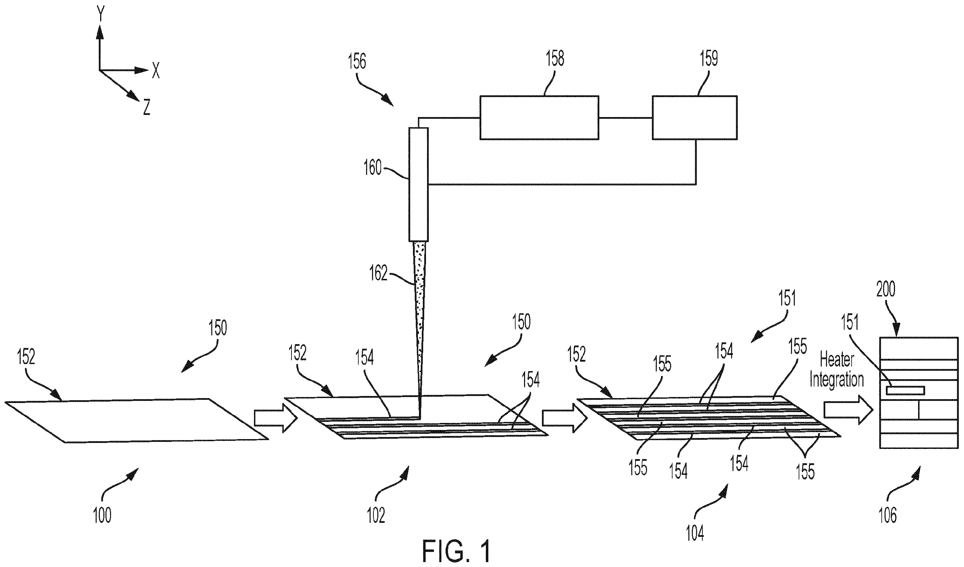

Turning now to FIG. 1, a process flow illustrates a LIG tuning process for fabricating a LIG heater having a tuned resistance according to a non-limiting embodiment. At operation 100, a base carbon heating element 150 is formed. The base carbon heating element 150 extends along a first axis (e.g., an X-axis) to define a length, a second axis (e.g., a Y-axis) orthogonal to the X-axis to define a thickness, and a third axis (e.g., a Z-axis) orthogonal to the first axis and the second axis to define a width. In one or more non-limiting embodiments, the base carbon heating element 150 is formed by impregnating a carbon-based precursor 152 (e.g., a carbon-based film or carbon-based substrate) with a polymer material that can be either thermoset (e.g., phenolics, polyarylacetylene - PAA) or thermoplastic (e.g., polyetheretherketone - PEEK, polyetherketoneketone - PEKK, Polyaryletherketone - PAEK, polyimide - PI). The carbon material can be carbon fiber and the carbon fiber volume fraction within the overall carbon/polymer material can vary based resistance target (e.g., in the range of 20 to 65%).

Turning to operation 102, a LIG tuning process is performed to tune the electrical resistance of the base carbon heating element 150. As described herein, the electrical resistance of the base carbon heating element 150 can be turned by forming one or more LIG regions 154 on the carbon-based precursor 152. In one or more non-limiting embodiments a laser system 156 can be utilized to form the LIG regions 154 on the carbon-based precursor 152. The laser system 156 includes a power supply 158 the drives a laser unit 160 to generate laser energy 162.

The laser energy 162 is directed to the base carbon heating element 150 to form one or more regions of LIG on the carbon-based precursor 152. The interaction between the laser energy 162 and the carbon-based precursor material effectively modifies the physical and chemical properties of carbon-based precursor 152 at the localized region on which the laser 162 impinges on the carbon-based precursor 152 to convert or "morph" the localized region of the carbon-based precursor 152 into LIG. By directing the laser energy 162 to the base carbon heating element 150 according to one or more various patterns, different patterns of LIG 154 (referred to herein as "LIG patterns") can be formed on the carbon-based precursor 152. In one or more non-limiting embodiments, the laser system 156 includes a laser controller 159 in signal communication with the power supply 158 and the laser unit 160. The laser controller 159 can receive inputs that select the output parameters (e.g., laser wavelengths, output frequency, laser temperature) of the laser unit 160. The laser controller 159 can also receive one or more input patterns. Based on the input patterns, the laser controller 159 can control the movement of the laser unit 160 such that the laser energy 162 is directed over the carbon-based precursor 152 to define a LIG pattern that matches the input pattern.

A converted LIG region 154 has lower electrical resistance compared to a non-LIG region 155 of the carbon-based precursor 152 (i.e., regions of the carbon-based precursor 152 not converted into LIG). In some embodiments, for example, the electrical resistance of LIG regions 154 can be further tuned based on the amount of LIG formed in one or more portions of a given LIG region compared to other portions of the same LIG region. For example, an LIG region 154 can be formed having a gradient pattern where the amount of formed LIG gradually increases from a first portion of the LIG region 154 (e.g., from a first end of the carbon-based precursor 152) to a second portion of the LIG region 154 (e.g., an opposing end of the carbon-based precursor 152). In the aforementioned gradient example, the electrical resistance of the LIG region would gradually decrease from the first portion of the carbon-based precursor 152 to the second portion of the carbon-based precursor 152.

As described herein, forming LIG regions 154 to define various LIG patterns can tune the overall resistance of the LIG heater 151 according to the corresponding LIG pattern(s) formed on the carbon-based precursor 152. For example, increasing the amount of LIG regions 154 formed on the carbon-based precursor 152 can reduce the overall electrical resistance of the LIG heater 151 in order to meet a targeted electrical resistance. In other non-limiting embodiments, different LIG pattern profiles can be used to tune the electrical of the LIG heater 151. For instance, rather than forming LIG regions 154 having a straight line profile, one or more LIG regions 154 can be formed to define a serpentine profile or a mesh pattern that achieves a different reduced electrical resistance.

At operation 104, a completed LIG heater 151 is shown after completing the formation the LIG regions 155 on the carbon-based precursor 152 to define the targeted LIG pattern. In one or more non-limiting embodiments, the LIG pattern is illustrated as an alternating arrangement of LIG regions 154 and non-LIG regions 155 spanning from one end of the carbon-based precursor 152 to an opposing end of the carbon-based precursor 152 (e.g., spanning along the Z-axis). It should be appreciated, however, that the LIG pattern included in the LIG heater 151 is not limited to the alternating arrangement of LIG regions 154 and non-LIG regions 155 shown at operation 104. According to other non-limiting embodiments, the LIG pattern can include, but is not limited to, one or more shaped patterns. In addition, although the LIG pattern illustrated in operation 104 is formed across the entire surface of the carbon-based precursor 152, the LIG pattern is not limited thereto. For example, the LIG pattern can be formed in gradient fashion on the carbon-based precursor 152, or at a localized area of the carbon-based precursor 152.

At operation 106, the LIG heater 151 is integrated in an allotrope electrothermal heater system 200. The allotrope electrothermal heater system 200 can be applied to a localized area of a vehicle or component targeted to receive heat and is configured to pass electricity (e.g., electrical current) through the LIG heater 151. The heat emitted from the LIG heater 151 can then be applied to the targeted localized area. The localized area of a vehicle can include, for example, an inner area of an aircraft or an outer skin of the aircraft. The component can include, but is not limited to, an airfoil, tube, valve or tank, e.g., utilized for potable or wastewater systems.

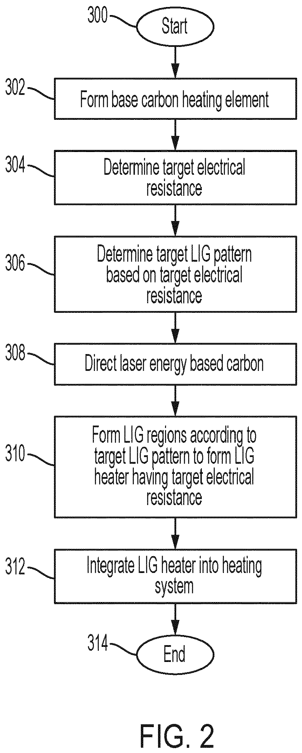

Referring to FIG. 2, a flow diagram illustrates a method of tuning an electrical resistance of a laser-induced graphene heater capable of being integrated in an allotrope electrothermal heater system according to a non-limiting embodiment. The method begins at operation 300, and at operation 302 a base carbon heating element is formed. The base carbon heating element will be utilized to form a LIG heater tuned to a targeted electrical resistance as described herein. At operation 304, a target electrical resistance for a desired LIG heater is determined. At operation 306, a target LIG pattern for achieving the target electrical resistance is determined at operation 308. At operation 308, laser energy is directed to the base carbon heating element. At operation 310, one or more LIG regions are formed on the base carbon heating element in response to the impinging laser energy. The LIG regions are formed according to the target LIG pattern to form a LIG heater having the target resistance. At operation 312, the formed LIG heater is integrated in an allotrope electrothermal heater system, and the method ends at operation 314.

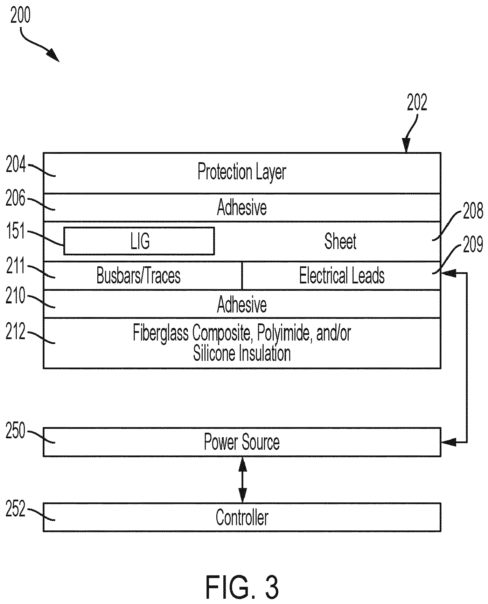

With reference now to FIG. 3, an allotrope electrothermal heater system 200 including a LIG heater 151 having a tuned resistance is illustrated according to a non-limiting embodiment. The allotrope electrothermal heater system 200 includes a heater package 202, a power source 250, and a controller 252. The heater package 202 includes one or more protection layers 204, a first adhesive layer 206, a polymer sheet 208, a second adhesive layer 210, and an insulation layer 212.

According to a non-limiting embodiment, the protection layer 204 is formed of a carbon-glass fiber composite and can serve as an outer skin. In one or more non-limiting embodiments, the outer skin can serve as a control surface that is shaped as an airfoil. It should be appreciated that other non-limiting embodiments, the protection layer 204 can serve as different outer skin surfaces of an aircraft 10 including but not limited to, blades, curved propellors, a nacelle bullnose, and a propeller spinner (nose cone). It is to be appreciated that an aircraft heating system is described, the allotrope electrothermal heater system 200 can be implemented other types of heating systems such as, for example, wind turbine and marine applications.

The polymer sheet 208 may be a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA). In some embodiments, the polymer sheet 208 may be a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN). In addition, the polymer sheet 208 may be formed of a non-woven, woven or unidirectional polymer.

As shown in FIG. 3, electrical leads 209 along with LIG conductive connections 211 are formed against the polymer sheet 208. The electrical leads 209 may be connected to the power source 250, which is operated by the controller 252. The controller 252 can control various operations of the power source 250 including, but not limited to, voltage levels, current levels, power frequencies, and power duration. In one or more non-limiting embodiments, the controller 252 can receive an input target temperature and in turn, control the power source 250 to output power that drives the LIG heater 151 to generate heat that meets and/or maintains the input target temperature. In one or more non-limiting embodiments, the controller 152 can store one or more predetermined LIG input patterns that are indexed to a predetermined electrical resistance of a LIG heater 151. Accordingly, the controller 152 can receive an input target resistance for a given LIG heater 151 to be fabricated, and can select the corresponding LIG input pattern from memory that will provide the input target resistance.

The electrical leads 209 are electrically coupled to the LIG heater 250 via the LIG electrical connections 211. The electrical connections 211 can include, for example, busbars and/or traces. The LIG connections 211 can be secured to, or formed onto, the polymer sheet 208 using known methods. The combination of the polymer sheet 208, the LIG heater 151, and the LIG connections 211 can effectively establish an "thermoelectrical heater", where the LIG heater 151 serves as a heating element that receives electrical power (e.g., electrical current) from the power source 250 via the LIG connections 211 and the electrical leads 209.

With continued reference to FIG. 3, the polymer sheet 212 is bonded to the protection layer 204 by the first adhesive layer 206. The first adhesive layer 206 can included any known suitable adhesive film or adhesive substance. Similarly, the insulating layer 212 is bonded to the electrical leads 209 and the LIG connections 211 using the second adhesive layer 210. The second adhesive layer 210 can include any known suitable adhesive film or adhesive substance. The second adhesive layer can include the same material or a different material than the first adhesive layer 206.

In one or more non-limiting embodiments, the insulating layer 212 can ensure that heat radiating from the LIG heater 151 is directed toward the protection layer 204. The insulating layer 212 can be formed of various materials including, but not limited to, a fiberglass composite, a polyimide or silicone insulation. Not all applications require the insulating layer. For example, ice protection for propellers may be installed on the outside of the propeller, and in such implementation, no insulation may be utilized.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of tuning an electrical resistance of a laser-induced graphene heater, the method comprising:
forming (302) a base carbon heating element (150);
determining (304) a target electrical resistance of a laser-induced graphene (LIG) heater to be fabricated from the base carbon heating element (150);
determining (306) a targeted LIG pattern that provides the target electrical resistance; and
directing (308) laser energy on to the base carbon heating element (150) based on the targeted LIG pattern to form at least one LIG region that defines a LIG pattern to from the LIG heater having the target electrical resistance.

2. The method of claim 1, wherein forming the at least one LIG region reduces an electrical resistance of the base carbon heating element (150).

3. The method of claim 2, wherein forming the base carbon heating element (150) includes impregnating a carbon-based precursor with a polymer material.

4. The method of claim 3, wherein a region of the carbon-based precursor receiving the laser energy is converted into LIG that defines the at least one LIG region.

5. The method of claim 4, wherein the at least one LIG region has a first electrical resistance, and a region that excludes the LIG has a second electrical resistance that is greater than the at least one LIG region.

6. The method of claim 4, wherein a first portion of the at least one LIG region includes a first amount of LIG and a second portion of the LIG region includes a second amount of LIG that is greater than the first portion, and optionally wherein the first portion of the at least one LIG region has a first electrical resistance defined by the first amount of LIG and the second portion of the at least one LIG region has a second electrical resistance defined by the second amount of the LIG that is greater than the first electrical resistance.

7. A laser-induced graphene (LIG) heater comprising:
a base carbon heating element (150) including a first region and a second region at a different location of the base carbon heating element (150) with respect to the first region; and
LIG formed in the second region such that the second region has different electrical resistance than the first region.

8. The LIG heater of claim 7, wherein the first region has a first electrical resistance and the second region has a second electrical resistance defined by the LIG that is less than the first electrical resistance.

9. The LIG heater of claim 7 or 8, wherein the first region excludes the LIG.

10. The LIG heater of claim 9, wherein the base carbon heating element (150) includes a plurality of the first regions and a plurality of the second regions, and optionally wherein the plurality of first regions and the plurality of second regions have an alternating arrangement spanning from one end of the base carbon heating element (150) to an opposing end of the base carbon heating element (150).

11. The LIG heater of claim 8, wherein the LIG is formed in both the first region and the second region.

12. The LIG heater of claim 11, wherein the first region includes a first amount of the LIG and the second region includes a second amount of the LIG different from the first amount.

13. The LIG heater of claim 12, wherein the first amount of the LIG is less than the second amount of the LIG.

14. The LIG heater of claim 13, wherein the first amount of the LIG defines the first electrical resistance and the second among of the LIG defines the second electrical resistance that is greater than the first electrical resistance, and optionally wherein the LIG is formed to define a gradient pattern extending from the first amount of the LIG among of the LIG to the second amount of the LIG.

15. The LIG heater of any of claims 7 to 14, wherein the base carbon heating element (150) includes a carbon-based precursor impregnated with polymer.
